(19) Europäisches Patentamt
European Patent Office
Office européen des brevets

(11) EP 3 501 051 B1

(12) EUROPEAN PATENT SPECIFICATION

(45) Date of publication and mention of the grant of the patent:
**21.08.2024 Bulletin 2024/34**

(21) Application number: **17842447.9**

(22) Date of filing: **22.08.2017**

(51) International Patent Classification (IPC):
***H01M 8/08*** *(2016.01)* ***H01M 4/90*** *(2006.01)*

(52) Cooperative Patent Classification (CPC):
**H01M 4/9083; H01M 4/9041; H01M 8/08;**
Y02E 60/10; Y02E 60/50

(86) International application number:
**PCT/AU2017/050891**

(87) International publication number:
**WO 2018/035561 (01.03.2018 Gazette 2018/09)**

(54) **FUEL CELL**

BRENNSTOFFZELLE

PILE À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2016 AU 2016903329**

(43) Date of publication of application:
**26.06.2019 Bulletin 2019/26**

(73) Proprietor: **Newsouth Innovations Pty Limited**
**Sydney, New South Wales 2052 (AU)**

(72) Inventor: **ZHAO, Chuan**
**Randwick**
**New South Wales 2031 (AU)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**CN-A- 103 326 041** **US-A1- 2007 259 236**
**US-A1- 2011 281 184** **US-A1- 2014 220 459**
**US-A1- 2014 302 407**

- **YANSONG ZHU ET AL: "Unravelling the Structure of Electrocatalytically Active Fe-N Complexes in Carbon for the Oxygen Reduction Reaction", ANGEWANDTE CHEMIE, INTERNATIONAL EDITION, vol. 53, no. 40, 12 August 2014 (2014-08-12), DE, pages 10673 - 10677, XP055604191, ISSN: 1433-7851, DOI: 10.1002/anie.201405314**
- **WILEY-VCH 2014 ET AL: "Supporting Information Unravelling the Structure of Electrocatalytically Active Fe-N Complexes in Carbon for Oxygen Reduction Reaction**", 12 August 2014 (2014-08-12), XP055604259, Retrieved from the Internet <URL:https://onlinelibrary.wiley.com/action/downloadSupplement?doi=10.1002/anie.201405314&file=anie_201405314_sm_miscellaneous_information.pdf> [retrieved on 20190710]**
- **ASIM KHAN ET AL: "Oxygen Reduction Reaction in Room Temperature Protic Ionic Liquids", JOURNAL OF PHYSICAL CHEMISTRY C, vol. 117, no. 36, 30 August 2013 (2013-08-30), pages 18334 - 18342, XP055604228, ISSN: 1932-7447, DOI: 10.1021/jp405759j**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 501 051 B1

## Description

### FIELD OF THE INVENTION

The present invention relates to a fuel cell. In particular, the present invention relates to a proton exchange membrane fuel cell (PEMFC), and to a catalyst and electrolyte combination suitable for use in a proton exchange membrane fuel cell.

### BACKGROUND

A fuel cell is a device that generates electricity via a chemical reaction.

A fuel cell has an anode, a cathode and an electrolyte. The reactions that produce electricity typically take place at the electrodes (i.e. at the anode and cathode). These reactions form electrons ($e^-$) and electrically charged particles (ions). In operation, the electrolyte facilitates the transfer of ions from one electrode to the other, whilst the electrons transfer from one electrode to the other via a connected exterior electrical circuit.

In a proton exchange membrane fuel cell, protons ($H^+$) and electrons ($e^-$) are formed at the anode, the protons transfer through the electrolyte from the anode to the cathode, while the electrons transfer to the cathode via an external electrical circuit. In a proton exchange membrane fuel cell, a membrane located between the anode and the cathode acts to permit the transfer of protons from the anode to the cathode, but impedes the transfer of electrons or anions from the anode to the cathode. Such a membrane causes electrons to flow through the external electrical circuit rather than travelling through the electrolyte.

An example of a reaction that may take place at the cathode of a PEMFC is the oxygen reduction reaction (ORR), wherein oxygen ($O_2$) is reduced to either $H_2O_2$ (from $[O_2]^{2-}$) in a 2-electron process or $H_2O$ (from $2[O]^{2-}$) in a 4-electron process. An example of a reaction that may take place at the anode of a PEMFC is the hydrogen oxidation reaction (HOR), wherein hydrogen ($H_2$) is oxidised to form protons ($2H^+$) and electrons ($2e^-$).

A catalyst is generally needed to catalyse the reactions at the cathode and the anode. The catalysts used typically comprise precious metals such as platinum. The high cost of the catalysts has limited the application of fuel cells.

As a person skilled in the art will appreciate, developments in fuel cell technology may be made in relation to any of the components of a fuel cell, either alone or in combination with the other components. For example, developments may be made in relation to the anode, the cathode, the electrolyte and/or the membrane of a fuel cell independently or in conjunction with the other components of the fuel cell.

Traditionally, developments in respect of the cathode have been slower and more challenging due to the complex nature of the reactions that typically occur at the cathode. For example, the reduction of oxygen involves many intermediates and is therefore more complex in nature than some other reduction or oxidation reactions. In addition, unfavourable energy barriers typically make the oxygen reduction reaction relatively sluggish compared to the hydrogen oxidation reaction.

Document "Unravelling the Structure of Electrocatalytically Active Fe-N Complexes in Carbon for the Oxygen Reduction Reaction", YANSONG ZHU ET AL, ANGEWANDTE CHEMIE, INTERNATIONAL EDITION, vol. 53, no. 40, 12 August 2014 (2014-08-12), pages 10673-10677, discloses highly active and stable non-precious metal catalysts for oxygen reduction reaction.

It would be advantageous to provide alternative fuel cells. It would also be advantageous if at least preferred embodiments of the present invention were to provide fuel cells that do not require the use of a precious metal catalyst (such as platinum) to catalyse the reduction reaction at the cathode.

### SUMMARY OF THE INVENTION

In a first aspect according to claim 1, the present invention provides a fuel cell comprising:

- an anode;
- a cathode;
- a non-precious metal catalyst in contact with the cathode, wherein the non-precious metal catalyst is a Fe-N/C catalyst; and
- an electrolyte comprising a protic ionic liquid in contact with the non-precious metal catalyst.

The electrolyte enables the movement of protons (or other cations) from the anode to the cathode.

Advantageously, the inventor has found that fuel cells of the present invention can be prepared in which the 4-electron reduction pathway of $O_2$ is favored over the 2-electron reduction pathway of $O_2$, thus forming $H_2O$ rather than $H_2O_2$. The 4-electron reduction process is desirable from an environmental perspective as it produces water ($H_2O$). Further, $H_2O_2$ is reactive and the presence of $H_2O_2$ can limit the durability of fuel cells.

The non-precious metal catalyst is a Fe-N/C catalyst.

In an embodiment, the protic ionic liquid has the formula $(A^-)(BH^+)$, wherein $A^-$ is the conjugate base of acid HA, and $BH^+$ is the conjugate acid of base B, and the difference in $pK_a$ between HA and $BH^+$ ($\Delta pK_a$) is between about 12 and about 30. In an embodiment, the $\Delta pK_a$ is between about 15 and about 18. In an embodiment, the base B is an amine. In an embodiment, the base B is of formula (I):

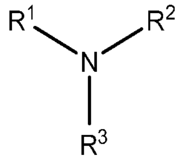 (I),

wherein $R^1$, $R^2$ and $R^3$ are each independently selected from the group consisting of hydrogen, optionally substituted alkyl (e.g. $C_{1-6}$alkyl), optionally substituted alkenyl (e.g. $C_{2-6}$alkenyl), and optionally substituted alkynyl (e.g. $C_{2-6}$alkynyl);

and wherein $R^1$, $R^2$ and/or $R^3$ are optionally joined to form a saturated or unsaturated optionally substituted heterocycle, a saturated or unsaturated optionally substituted heterobicycle or a saturated or unsaturated optionally substituted heterotricycle.

In an embodiment, the base B is a trialkyl amine. In an embodiment, the base B is diethylmethylamine.

In an embodiment, the conjugate base $A^-$ is the conjugate base of a strong acid. In an embodiment, the conjugate base $A^-$ is non-nucleophilic.

In an embodiment, the conjugate base $A^-$ is triflate ($TfO^-$).

In an embodiment, the protic ionic liquid is [dema][TfO].

In an embodiment, the Fe-N/C catalyst is derived from reagents including p-phenylenediamine.

In an embodiment, the Fe-N/C catalyst is derived from reagents including ferric chloride.

In an embodiment, the Fe-N/C catalyst is derived from reagents including carbon black.

In an embodiment, the Fe-N/C catalyst is derived from p-phenylenediamine, ferric chloride and carbon black.

In a second aspect according to claim 9, the present invention provides the use of a non-precious metal catalyst in a fuel cell to effect the $4e^-$ reduction of $O_2$ to $H_2O$ in an electrolyte comprising a protic ionic liquid, wherein the non-precious metal catalyst is a Fe-N/C catalyst.

In a third aspect according to claim 10, the present invention provides a method of reducing $O_2$ to $H_2O$ comprising contacting $O_2$ and a non-precious metal catalyst in an electrolyte comprising a protic ionic liquid, wherein the non-precious metal catalyst is a Fe-N/C catalyst.

In a fourth aspect, the present invention provides an electrode for use in a fuel cell comprising an electrolyte comprising a protic ionic liquid, the electrode having a non-precious metal catalyst on its surface, wherein the non-precious metal catalyst is a Fe-N/C catalyst.

The non-precious metal catalyst is a Fe-N/C catalyst. In an embodiment, the protic ionic liquid has the formula $(A^-)(BH^+)$, wherein $A^-$ is the conjugate base of acid HA, and $BH^+$ is the conjugate acid of base B, and the difference in $pK_a$ between HA and $BH^+$ ($\Delta pK_a$) is between about 12 and about 30.

The present invention relates to developments concerning the cathode and electrolyte combination for a fuel cell. As a person skilled in the art will appreciate, conventional anodes and membranes (e.g. proton exchange membranes) may be used in the fuel cell of the present invention, provided they are compatible with the cathode and electrolyte combination.

**BRIEF DESCRIPTION OF THE FIGURES**

Preferred embodiments of the present invention are described below, by way of example only, with reference to the accompanying drawings in which:

**Figure 1** shows (a) SEM image and (b) high magnification TEM images of fabricated Fe-N/C only catalyst. (c) deconvoluted N 1s spectrum of Fe-N/C catalyst survey scan and (d) deconvoluted Fe 2p spectrum of Fe-N/C catalyst

survey scan.

**Figure 2** shows (a) ring disk electrode (RDE) voltammograms of Fe-N/C in $O_2$ saturated [dema][TfO] at different rotation speed and at a scan rate of 0.01 V $s^{-1}$. (b) Corresponding Koutecky-Levich plots of Fe-N/C at various potentials. (c) rotating ring disk electrode (RRDE) voltammograms of Fe-N/C and Pt/C at 1600 rpm (ring potential is set at -0.90 V) and (d) percentage peroxide for Fe-N/C and Pt/C at various potentials (determined from the corresponding RRDE voltammograms) .

**Figure 3** shows chronoamperometric responses of Fe-N/C at potential -0.50 V and Pt/C at a potential of -0.15 V in (a) $O_2$ saturated [dema] [TfO] and (b) with addition of 3 M $CH_3OH$.

**Figure 4** shows (a) EDX line scan and (b) TEM image of fabricated Fe-N/C catalyst.

**Figure 5** shows an XRD spectrum of fabricated Fe-N/C.

**Figure 6** shows (a) XPS spectrum of Fe-N/C catalyst and (b) deconvoluted S 2p spectrum of Fe-N/C.

**Figure 7** shows cyclic voltammograms of carbon black (CB), Fe-N/C and Pt/C loaded on glassy carbon electrodes in $O_2$ saturated (solid line) and Ar saturated (dash line) [dema] [TfO] at the scan rate of 0.1 V $s^{-1}$.

**Figure 8** shows (a) RDE voltammograms of Pt/C in $O_2$ saturated [dema][TfO] at different rotation speed (scan rate of 0.01 V $s^{-1}$); (b) corresponding Koutecky-Levich plots of Pt/C at various potentials.

**Figure 9** shows cyclic voltammograms of Pt disk electrode in Ar-saturated [dema] [TfO] (dash line) and Ar-saturated [dema] [TfO] containing 50 mM $H_2O_2$ (solid line) .

## DETAILED DESCRIPTION OF EMBODIMENTS OF THE INVENTION

In a first aspect, the present invention provides a fuel cell comprising:

- an anode;
- a cathode;
- a non-precious metal catalyst in contact with the cathode; and
- an electrolyte comprising a protic ionic liquid in contact with the non-precious metal catalyst.

### Electrodes

The fuel cell comprises an anode and cathode (i.e. electrodes). In use, the electrodes are electrically connected to an external electrical circuit and provide electrical power to the external circuit (i.e. do work). The electrodes may be formed of any material capable of functioning as an electrode. In the fuel cell, the electrode forms an electrical bridge or connection for electrons to move or be transported between the electrolyte and the external electrical circuit. Accordingly, to function as an electrode, the electrode must be able to conduct electricity. Preferably, the electrode is formed of materials which are stable in, and do not react to an appreciable extent with, the electrolyte in contact with the electrode or products formed by the reactions in the fuel cell. Preferably, the electrodes have minimal resistance to maximise efficiency. Typically, the electrodes are made of a metallic or otherwise conductive substrate (such as carbon, platinum, copper, nickel etc.). In embodiments that utilise gaseous components (e.g. hydrogen and/or oxygen), the electrodes typically comprise gas diffusion layers to allow the gases to diffuse to the electrolyte (e.g. hydrogen fuel at the anode and oxygen at the cathode).

In an embodiment, the cathode comprises glassy carbon.

In an embodiment, the anode comprises platinum.

The electrodes may be formed entirely of a given material or may comprise layers of different materials. For example, an anode may be formed of platinum, or may be formed of another metal and have a platinum coating. In embodiments that have a surface coating on the electrode, the surface coating may completely coat the surface of the electrode or may coat only a portion of it. For example, an anode may be completely coated in platinum or may have only a portion of the surface coated in platinum. In some embodiments, the electrode may be formed of a largely

electrically non-conductive material with a coating of an electrically conductive material.

**Electrolyte**

The electrolyte enables the movement of protons (or other cations) from the anode to the cathode. A single electrolyte may be in contact with both the anode and the cathode (with a proton exchange membrane in the electrolyte). However, in some embodiments, an electrolyte comprising a protic ionic liquid may be in contact with the non-precious metal catalyst in contact with the cathode, and another electrolyte may be in contact with the anode (and the catalyst on the anode), provided the combination of electrolytes enables the movement of protons (or other cations) from the anode to the cathode.

In some embodiments, the electrolyte comprising a protic ionic liquid in contact with the non-precious metal catalyst in contact with the cathode may comprise components in addition to the protic ionic liquid, such as a solvent (e.g. water). In some embodiments, the electrolyte is incorporated in a solid polymeric matrix comprising a polymeric material (e.g. sulfonated polyimides, polybenzimidazole, polyvinylidenefluoride (PVDF) etc.) to form a solid matrix comprising the electrolyte.

In an embodiment, the electrolyte comprises at least 20% v/v PIL, for example, at least about 50%, at least about 60%, at least about 70%, at least about 80%, at least about 90%, at least about 95%, at least about 97%, at least about 98%, at least about 99%, at least about 99.5%, or at least about 99.9% v/v PIL.

An ionic liquid is a salt in the liquid state. Ionic liquids typically have a melting point below about 100 °C. Protic ionic liquids are a class of ionic liquids. Protic ionic liquids are ionic liquids formed from an acid and a base, in which a proton is transferred from the acid to the base, thus forming a conjugate base and a conjugate acid.

The low vapour pressure, non-flammability, high thermal and electrochemical stability of PILs make PILs suitable for use in proton exchange membrane fuel cells (PEMFCs). These properties allow PILs to operate at higher temperatures than aqueous-based electrolytes without the need for humidification. Some commonly used proton exchange membranes, such as Nafion, rely on liquid water humidification of the membrane to transport protons. When such membranes are used with aqueous-based electrolytes, especially when operated at a temperature of about 80 to 90 °C (or above), humidification of the fuel gas is commonly used to avoid the membrane dehydrating, adding to the complexity and cost of operating such fuel cells. In some embodiments, the fuel cell of the present invention can be operated at temperatures higher than about 90 °C without humidification.

A protic ionic liquid may be described by the formula $(A^-)(BH^+)$, wherein $A^-$ is the conjugate base of acid HA, and $BH^+$ is the conjugate acid of base B.

In some embodiments, the difference in $pK_a$ between HA and $BH^+$ ($\Delta pK_a$) is between about 12 and about 30, for example, between about 13 and about 25, between about 15 and about 25, between about 15 and about 20, between about 20 and about 25, between about 17 and about 20, between about 12 and about 18, between about 16 and about 19, between about 17 and about 19.

In an embodiment, the base B is an amine.

In an embodiment, the base B is a tertiary amine.

In an embodiment, the base B is a trialkyl amine, for example, triethylamine, dimethylethylamine, diethylmethylamine.

In an embodiment, the base B is of formula (I):

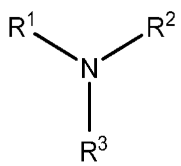

(I),

wherein $R^1$, $R^2$ and $R^3$ are each independently selected from hydrogen, optionally substituted alkyl (e.g. $C_{1-6}$alkyl), optionally substituted alkenyl (e.g. $C_{2-6}$alkenyl), and optionally substituted alkynyl (e.g. $C_{2-6}$alkynyl);

and wherein $R^1$, $R^2$ and/or $R^3$ are optionally joined to form a saturated or unsaturated optionally substituted heterocycle, a saturated or unsaturated optionally substituted heterobicycle or a saturated or unsaturated optionally substituted heterotricycle.

In some embodiments, the base B is an imine. For example, the base B may include 1,8-diazabicyclo[5.4.0]undec-7-ene (DBU).

In some embodiments, the conjugate base $A^-$ is the conjugate base of a strong acid. Strong acids typically

have a $pK_a$ of less than 0, for example, between about 0 and about -20, between about 0 and about - 15, between about 0 and about -10, between about 0 and about -5, between about -1 and about -15, between about -1 and about -10, between about -1 and about -5, between about -2 and about -15, between about -2 and about -10, between about -2 and about -5, between about -3 and about -10, between about -4 and about -10, between about -5 and about -10, between about -6 and about -8, between about -10 and about -20, between about -10 and about -15, between about -5 and about -15 or between about -12 and about -16.

The $pK_a$ values of common acids (and conjugate acids of common bases) are widely reported in the literature and are well measured. For example, Evans' $pK_a$ table

(http://evans.rc.fas.harvard.edu/pdf/evans_pKa_table.pdf) and the Bordwell $pK_a$ table (http://www.chem.wisc.edu/areas/reich/pkatable/index.htm) provide the $pK_a$ values of many common acids (and conjugate acids of common bases).

Examples of strong acids which may be useful for forming the protic ionic liquid for use in a fuel cell of the present invention include triflic acid ($CF_3SO_3H$, TfOH) and other fluorinated alkyl sulfonic acids (e.g. $F_9C_4SO_3H$), methanesulfonic acid ($CH_3SO_3H$, MsOH), trifluoroacetic acid ($CF_3CO_2H$, TFA) and trifluoromethanesulfonimide ($(CF_3SO_2)_2NH$, also known as bistriflimide or bis(trifluoromethane)sulfonimide) .

Mixtures of two or more acids and/or two or more bases may be used to form the PIL. For example, a PIL may comprise more than one conjugate base (e.g. two or more of $TfO^-$, $F_9C_4SO_3^-$, $CF_3CO_2^-$, $CH_3SO_3^-$ or $(CF_3SO_2)_2N^-$), and/or more than one conjugate acid (e.g. two or more of triethylammonium, dimethylethylammonium or diethylmethylammonium). Such mixtures may be prepared by mixing two different PILs, or may be made by adding two or more acids with a base, two or more bases with an acid, or two or more acids with two or more bases.

Suitable acid HA and base B pairs may be selected based on their reported or predicted $\Delta pK_a$ value. In such embodiments, the $\Delta pK_a$ may be chosen to optimise the open circuit potential (OCP) of the protic ionic liquid derived from the acid HA and base B pair. It has been reported that the OCP may depend on the $\Delta pK_a$ value of the protic ionic liquid. For example, a protic ionic liquid having $\Delta pK_a$ value in the range of about 12 to about 16 or about 19 to about 21 would be expected to have an OCP in the range of about 0.7 to about 0.9 V. In contrast, a protic ionic liquid having $\Delta pK_a$ value in the range of about 16 to about 19 would be expected to have an OCP in the range of about 0.9 to about 1.1 V. Accordingly, in some embodiments, the protic ionic liquid has an OCP in the range of about 0.7 to about 1.1 V, for example, between about 0.9 to about 1.1, 1.0 to about 1.1 V.

In some embodiments, the conjugate base $A^-$ is non-nucleophilic. A non-nucleophilic conjugate base is a conjugate base that is substantially non-nucleophilic (i.e. a poor nucleophile or compound that does not act as a nucleophile to an appreciable extent). Without wishing to be bound by theory, it is believed that a non-nucleophilic conjugate base $A^-$ is less likely to bind to a nucleophilic site of the non-precious metal catalyst (which may also be an active site of the catalyst). An example of a non-nucleophilic conjugate base is triflate ($TfO^-$), which is usually obtained from triflic acid (TfOH). Other non-nucleophilic conjugate bases include sterically encumbered conjugate bases.

In an embodiment, the protic ionic liquid is diethylmethylammonium trifluoromethanesulfonate [dema][TfO]. Diethylmethylammonium trifluoromethanesulfonate [dema][TfO] exhibits a high and stable open circuit potential (OCP) (1.03 V) at 150 °C which is better than anhydrous phosphoric acid under same conditions. The better electrochemical performance of [dema][TfO] may be attributed to its intermediate N-H bond strength and ΔpKa. Diethylmethylammonium bis(trifluoromethylsulfonyl)imide, [dema][$NTf_2$], which has similar bulk properties as [dema] [TfO], exhibits lower OCP (0.70 V) than [dema][TfO] under same conditions, likely due to the relatively slower kinetics of ORR and HOR. The poor electrochemical activity for ORR and HOR of [dema][$NTf_2$] is likely due to lower proton activity resulting from a theoretically stronger N-H bond. Due to the enhanced kinetics of ORR and HOR, [dema] [TfO] is a suitable electrolyte for non-humidified fuel cells.

The protic ionic liquid is in a liquid state when the fuel cell of the present invention is in use. As a person skilled in the art will appreciate, a fuel cell may be operated at various temperatures and protic ionic liquids may solidify at lower temperatures. The protic ionic liquid is a liquid at the operating temperature of the fuel cell. Typically, the protic ionic liquid has a melting point below about 100 °C (e.g. below about 80 °C, below about 50 °C or below about 20 °C).

**Membrane**

A proton exchange membrane fuel cell comprises a membrane disposed between the anode and the cathode. The membrane acts to permit protons (or other cations) to pass or conduct through the membrane while inhibiting or impeding the passage or conduction of electrons. This acts to inhibit or impede the direct passage of electrons through the electrolyte between the anode and cathode; instead they must pass through an external electrical circuit. The membrane typically also prevents the fuel and oxygen from passing through, maintaining the separation of the fuel and oxygen in the fuel cell. Alternatively, an additional membrane may be used for this purpose.

The membrane may, for example, be formed of a proton conducting polymer, such as Nafion (a sulfonated tetrafluoroethylene based fluoropolymer-copolymer).

A variety of proton exchange membranes are commercially available and may be used in the fuel cell of the present invention. Such membranes include Nafion membranes produced by DuPont (e.g. Nafion HP, Nafion 211, Nafion XL, Nafion 212, Nafion NE1035, Nafion 115, Nafion 117, Nafion 1110, Nafion N2100TX, Aciplex (produced by Asahi Chemical Company), Flemion (produced by Asahi Chemical Company), BAM (produced by Ballard Advanced Materials Corporation), and SEBS (Dais Analytic Corporation). In addition, membranes comprising polyvinylidenefluoride (PVDF) and its derivatives may also be used.

**Non-precious metal catalyst**

The fuel cell of the present invention comprises a non-precious metal catalyst in contact with the cathode.

As used herein, the term "precious metal catalyst" refers to a catalyst comprising a precious metal (Pt, Pd, Ag or Rh), and the term "non-precious metal catalyst" refers to a catalyst that does not comprise a precious metal (Pt, Pd, Ag or Rh) or does not comprise a precious metal (Pt, Pd, Ag or Rh) in any appreciable amount. The "non-precious metal catalyst" in contact with the cathode typically comprises less than 0.05 mg/cm$^2$ of a precious metal (Pt, Pd, Ag or Rh).

The inventors have found that fuel cells can be prepared comprising a protic ionic liquid electrolyte and a non-precious metal catalyst in contact with the cathode. A limiting factor for many potential applications of fuel cells is the cost of the precious metal catalysts commonly used in fuel cells, and therefore it is advantageous to provide a fuel cell in which at least the catalyst in contact with the cathode is a non-precious metal catalyst.

The non-precious metal catalyst is capable of catalysing the reduction of $O_2$ in the electrolyte comprising the protic ionic liquid. Preferably the catalyst is capable of catalysing the 4e$^-$reduction of oxygen to water in the electrolyte comprising the protic ionic liquid.

The inventor has found that by combining a non-precious metal catalyst on the cathode with an electrolyte comprising a PIL in contact with the non-precious metal catalyst, it is possible to prepare a fuel cell comprising a non-precious metal catalyst in contact with the cathode, in which the non-precious metal catalyst is capable of catalyzing the 4e$^-$ reduction of oxygen to water.

To the best of the inventor's knowledge, the 4-electron reduction of $O_2$ in a protic ionic liquid has previously only been achieved using platinum catalysts. The inventor has now surprisingly found that a non-precious metal catalyst can be used to catalyse the oxygen reduction reaction in a PIL. The inventor has also surprisingly found that the combination of a non-precious metal catalyst and a PIL may be used to effect the 4e$^-$ reduction of $O_2$ to $H_2O$ (via $2[O]^{2-}$) at a low overpotential.

The non-precious metal catalyst is present in the fuel cell to catalyse the reduction of oxygen. In an embodiment, the non-precious metal catalyst catalyses the reduction of oxygen from $O_2$ to $[O_2]^{2-}$ (which may form $H_2O_2$ upon addition of $2H^+$). In another embodiment, the non-precious metal catalyst catalyses the reduction of $[O_2]^{2-}$ (or $H_2O_2$) to $2[O]^{2-}$ (thus forming $H_2O$ upon addition of $2H^+$). In another embodiment, the the non-precious metal catalyst catalyses the reduction of oxygen from $O_2$ to $2[O]^{2-}$ (thus forming $2H_2O$ upon addition of $4H^+$).

In some embodiments, the non-precious metal catalyst is on the entire surface (e.g. covers the entire surface) of the cathode. In other embodiments, the non-precious metal catalyst is on just a portion (e.g. covers only a portion) of the surface of the cathode.

The catalyst may be brought into contact with the electrode by any means that results in the catalyst being in contact with the electrode. The catalyst may be formed on the surface of the electrode. More typically, the catalyst is pre-formed and then applied to the surface of the electrode. A composition comprising the catalyst in a solvent and/or a binder may be used to assist with forming a layer of the catalyst on the electrode.

The non-precious metal catalyst in contact with the cathode is a Fe-N/C catalyst.

Accordingly, in an aspect, the present invention provides a fuel cell comprising:

- an anode;
- a cathode;
- a Fe-N/C catalyst in contact with the cathode; and
- an electrolyte comprising a protic ionic liquid in contact with the Fe-N/C catalyst.

Fe-N/C catalysts may be made using various known methods. Fe-N/C catalysts can also be made using a variety of different conditions and starting materials, which can give rise to Fe-N/C catalysts with differing properties (e.g. different tolerances to different PILs, temperature, catalytic turnover etc.).

Starting materials for making Fe-N/C catalysts typically include an iron source, a nitrogen source and a carbon source. For example, iron sources that may be used for making Fe-N/C catalysts include iron (II) or iron (III) salts such as $FeCl_3$, $Fe(NO_3)_3$, $Fe(acetylacetate)_3$ and $FeSO_4$. Nitrogen sources that may be used for making Fe-N/C catalysts include p-phenylenediamine, m-phenylenediamine, o-phenylenediamine, aniline and 2,4,6-tris(2-pyridyl)-s-triazine. Carbon sources that may be used for making Fe-N/C catalysts include amorphous carbon (e.g. carbon black). Other carbon sources may also be used.

The Fe-N/C catalyst is typically prepared by pyrolysing the starting materials. The temperature at which the pyrolysis reaction takes place can vary significantly depending on the starting materials that are to be employed in making the Fe-N/C catalyst. A person skilled in the art will be able to determine a suitable temperature at which to perform the pyrolysis reaction. The pyrolysis reaction typically takes place at above about 200 °C, for example, between about 200 and about 2000 °C, between about 200 and about 1500 °C, between about 300 and about 1000 °C, between about 500 and about 1000 °C or between about 800 and about 1000 °C.

In some embodiments, the Fe-N/C catalyst is prepared by pyrolysing:

- an iron source selected from $FeCl_3$, $Fe(NO_3)_3$, $Fe(acetylacetate)_3$ and $FeSO_4$ or a combination thereof;
- a nitrogen source selected from p-phenylenediamine, m-phenylenediamine, o-phenylenediamine, aniline and 2,4,6-tris(2-pyridyl)-s-triazine or a combination thereof; and
- amorphous carbon.

In an embodiment, the Fe-N/C catalyst is derived from p-phenylenediamine, ferric chloride and carbon black. In an embodiment, the Fe-N/C catalyst is prepared by pyrolysing p-phenylenediamine, ferric chloride and carbon black.

In some embodiments, the Fe-N/C catalyst has nanostructured Fe-N/C particles which are relatively uniform and well dispersed. In some embodiments, the Fe-N/C catalyst has a high proportion of pyridinic N and graphitic N sites compared to $Fe_3C$ and FeS sites. A person skilled in the art will be able to determine the proportion of such sites using known techniques. For example, the pyridinic N and graphitic N sites in an Fe-N/C catalyst may be identified and quantified using a combination of different techniques (e.g. XRD, scanning transmission electron microscopy (STEM), high resolution transmission electron microscopy (HRTEM) and XPS). FeS and Fe3C can be detected by using XRD and STEM/HRTEM. Peak intensities and peak positions in the XPS spectrum respectively provide information about the quantity of sites as well as elemental/chemical composition.

Compared to some Pt/C catalysts, the Fe-N/C catalyst may be easily produced and/or produced at lower cost, thus making it attractive for large scale commercial applications.

**Fuel cell**

In operation, the fuel (e.g. $H_2$ gas) is brought into contact with the anode, whilst oxygen (e.g. from air) is brought into contact with the cathode (e.g. by dissolution in the electrolyte).

At the anode, a chemical reaction oxidises the fuel to form protons and electrons. Typically a catalyst is in contact with the anode to catalyse this reaction. The catalyst in contact with the anode may be any catalyst capable of catalysing the reaction and may be a precious metal catalyst (e.g. a Pt catalyst) or a non-precious metal catalyst. The electrolyte in contact with the anode enables the movement of protons from the anode to the cathode.

At the cathode, the oxygen combines with the electrons that have travelled or been conducted though the external electrical circuit and the protons that have travelled or been conducted through the electrolyte from the anode thereby reducing oxygen to either $H_2O_2$ or $H_2O$, preferably $H_2O$. The non-precious metal catalyst (i.e., the Fe-N/C catalyst) catalyses this reaction (the reduction of the oxygen). Preferably, the oxygen is reduced to $H_2O$ as water is a relatively inert and environmentally safe product. Furthermore, the presence of $H_2O_2$ within the fuel cell can reduce the durability of the fuel cell.

Typically multiple fuel cells are combined in series (a fuel cell stack) to increase the voltage generated. Fuel cells may also be combined in parallel to increase the current delivery (i.e. increase the overall current output (Amps)).

**Definitions**

Unless otherwise herein defined, the following terms will be understood to have the general meanings which follow. The terms referred to below have the general meanings which follow when the term is used alone and when the term is used in combination with other terms, unless otherwise indicated. Hence, for example, the definition of "alkyl" applies to "alkyl" as well as the "alkyl" portions of "aryl$C_{1-6}$alkyl", "heteroaryl$C_{1-6}$alkyl" etc.

The term "alkyl" refers to a straight chain or branched chain saturated hydrocarbyl group. Preferred are $C_{1-6}$alkyl

and $C_{1-4}$alkyl groups. The term "$C_{1-6}$alkyl" refers to an alkyl group having 1 to 6 carbon atoms. Examples of $C_{1-6}$alkyl include methyl (Me), ethyl (Et), propyl (Pr), isopropyl (i-Pr), butyl (Bu), isobutyl (i-Bu), secbutyl (s-Bu), tert-butyl (t-Bu), pentyl, neopentyl, hexyl and the like. Unless the context requires otherwise, the term "alkyl" also encompasses alkyl groups containing one less hydrogen atom such that the group is attached via two positions, i.e. divalent.

The term "alkenyl" refers to a straight chain or branched chain hydrocarbyl group having at least one double bond of either *E*- or *Z*- stereochemistry where applicable. Preferred are $C_{2-6}$alkenyl and $C_{2-4}$alkenyl groups. The term "$C_{2-6}$alkenyl" refers to an alkenyl group having 2 to 6 carbon atoms. Examples of $C_{2-6}$alkenyl include vinyl, 1-propenyl, 1- and 2-butenyl and 2-methyl-2-propenyl. Unless the context requires otherwise, the term "alkenyl" also encompasses alkenyl groups containing one less hydrogen atom such that the group is attached via two positions, i.e. divalent.

The term "alkynyl" refers to a straight chain or branched chain hydrocarbyl group having at least one triple bond. Preferred are $C_{2-6}$alkynyl and $C_{2-4}$alkynyl groups. The term "$C_{2-6}$alkynyl" refers to an alkynyl group having 2 to 6 carbon atoms. Examples of $C_{2-6}$alkynyl include ethynyl, 1-propynyl, 1- and 2-butynyl, 2-pentynyl, 3-pentynyl, 4-pentynyl, 2-hexynyl, 3-hexynyl, 4-hexynyl and 5-hexynyl and the like. Unless the context indicates otherwise, the term "alkynyl" also encompasses alkynyl groups containing one less hydrogen atom such that the group is attached via two positions, i.e. divalent.

The terms "hydroxy" and "hydroxyl" refer to the group -OH.

The term "alkoxy" refers to an alkyl group as defined above covalently bound via an O linkage, such as methoxy, ethoxy, propoxy, isoproxy, butoxy, tert-butoxy and pentoxy. Preferred are $C_{1-6}$alkoxy, $C_{1-4}$alkoxy and $C_{1-3}$alkoxy groups.

The term "carboxylate" or "carboxyl" refers to the group $-COO^-$or -COOH.

The term "ester" refers to a carboxyl group having the hydrogen replaced with, for example, an alkyl group ("alkylester" or "alkylcarbonyl"), an aryl or aralkyl group ("arylester" or "aralkylester") and so on. $CO_2C_{1-3}$alkyl groups are preferred, such as for example, methylester ($-CO_2Me$), ethylester ($-CO_2Et$) and propylester ($-CO_2Pr$) and reverse esters thereof (e.g. -OC(O)Me, -OC(O)Et and -OC(O)Pr).

The term "amino" refers to the group $-NH_2$.

The term "substituted amino" or "secondary amino" refers to an amino group having a hydrogen replaced with, for example, an alkyl group ("alkylamino"), an aryl or aralkyl group ("arylamino", "aralkylamino") and so on. $C_{1-3}$alkylamino groups are preferred, such as for example, methylamino (-NHMe), ethylamino (-NHEt) and propylamino (-NHPr).

The term "disubstituted amino" or "tertiary amino" refers to an amino group having the two hydrogens replaced with, for example, an alkyl group, which may be the same or different ("di(alkyl)amino"), an aryl and alkyl group ("aryl(alkyl)amino") and so on. Di($C_{1-3}$alkyl)amino groups are preferred, such as, for example, dimethylamino ($-NMe_2$), diethylamino ($-NEt_2$), dipropylamino ($-NPr_2$) and variations thereof (e.g. -N(Me) (Et) and so on).

The term "acyl" or "aldehyde" refers to the group -C(=O)H.

The term "substituted acyl" or "ketone" refers to an acyl group having the hydrogen replaced with, for example, an alkyl group ("alkylacyl" or "alkylketone"), an aryl group ("arylketone"), an aralkyl group ("aralkylketone") and so on. $C_{1-3}$alkylacyl groups are preferred.

The term "amido" or "amide" refers to the group $-C(O)NH_2$.

The term "aminoacyl" refers to the group -NHC(O)H.

The term "substituted amido" or "substituted amide" refers to an amido group having a hydrogen replaced with, for example, an alkyl group ("alkylamido" or "alkylamide"), an aryl ("arylamido"), aralkyl group ("aralkylamido") and so on. $C_{1-3}$alkylamide groups are preferred, such as, for example, methylamide (-C(O)NHMe), ethylamide (-C(O)NHEt) and propylamide (-C(O)NHPr) and reverse amides thereof (e.g. -NHC(O)Me, -NHC(O)Et and -NHC(O)Pr).

The term "disubstituted amido" or "disubstituted amide" refers to an amido group having the two hydrogens replaced with, for example, an alkyl group ("di(alkyl)amido" or "di(alkyl)amide"), an aralkyl and alkyl group ("alkyl (aralkyl) amido") and so on. Di($C_{1-3}$alkyl)amide groups are preferred, such as, for example, dimethylamide ($-C(O)NMe_2$), diethylamide ($-C(O)NEt_2$) and dipropylamide ($-C(O)NPr_2$) and variations thereof (e.g. -C(O)N(Me)Et and so on) and reverse amides thereof.

Unless otherwise defined, the term "optionally substituted" as used herein indicates a group may or may not be substituted with 1, 2, 3, 4 or more groups, preferably 1, 2 or 3 groups, more preferably 1 or 2 groups, independently selected from the group consisting of alkyl (e.g. $C_{1-6}$alkyl), alkenyl (e.g. $C_{2-6}$alkenyl), alkynyl (e.g. $C_{2-6}$alkynyl), cycloalkyl (e.g. $C_{3-8}$cycloalkyl), hydroxyl, oxo, alkoxy (e.g. $C_{1-6}$alkoxy), aryloxy, aryl$C_{1-6}$alkoxy, halo, halo$C_{1-6}$alkyl (such as $-CF_3$ and $-CHF_2$), halo$C_{1-6}$alkoxy (such as $-OCF_3$ and $-OCHF_2$), carboxyl, esters, cyano, nitro, amino, substituted amino, disubstituted amino, acyl, ketones, amides, aminoacyl, substituted amides, disubstituted amides, aryl, aryl$C_{1-6}$alkyl, heterocyclyl$C_{1-6}$alkyl, aryl$C_{2-6}$alkenyl, heterocyclyl$C_{2-6}$alkenyl, aryl$C_{2-6}$alkynyl, heterocyclyl$C_{2-6}$alkynyl, heteroaryl$C_{1-6}$alkyl, heteroaryl$C_{2-6}$alkenyl, heteroaryl$C_{2-6}$alkynyl, heterocyclyl and heteroaryl, wherein each alkyl, alkenyl, alkynyl, cycloalkyl, aryl and heterocyclyl and groups containing them may be further optionally substituted. Optional substituents in the case of heterocycles containing N may also include but are not limited to $C_{1-6}$alkyl i.e. N-$C_{1-6}$alkyl.

For optionally substituted "alkyl", "alkenyl" and "alkynyl", the optional substituent or substituents are preferably selected from amino, substituted amino, disubstituted amino, aryl, halo (e.g. F, Cl, Br, I), heterocyclyl, $C_{1-6}$alkoxy, hydroxyl,

oxo, aryloxy, carboxyl, carboxylate and esters. Each of these optional substituents may also be optionally substituted with any of the optional substituents referred to above.

## EXAMPLES

The present invention is further described below by reference to the following non-limiting Examples.

### Example 1

*1 Methods*

*1.1 Materials and methods*

Diethylmethylamine (97%), trifluoromethanesulfonic acid (TfOH) (98%), *p*-phenylenediamine (*p*-PD) (≥ 99%), Nafion solution (5 wt%), potassium chloride (KCl) (≥ 99%) and Pt/C (10 wt% Pt) were purchased from Sigma Aldrich. Conductive carbon black (Super C-65) was purchased from Timcal. Potassium ferricyanide ($K_3[Fe(CN)_6]$), ammonium peroxydisulfate (APS) (98%), and hydrogen peroxide ($H_2O_2$) (30%) were purchased from Chem Supply. Ferric chloride ($FeCl_3$) (97%) was purchased from Strem Chemicals and hydrochloric acid (HCl) (32%) was purchased from RCI Labscan. Oxygen (high purity) and argon (high purity) were purchased from Air Liquide.

*2 Synthesis and Characterisation*

*2.1 Synthesis of PIL*

The PIL, [dema][TfO], was synthesized and characterized using the procedure described previously (A. Khan, X. Lu, L. Aldous, C. Zhao, J. Phys. Chem. C 2013, 117, 18334-18342; X. Lu, G. Burrell, F. Separovic, C. Zhao, J. Phys. Chem. B 2012, 116, 9160-9170; C. Zhao, G. Burrell, A. A. J. Torriero, F. Separovic, N. F. Dunlop, D. R. MacFarlane, A. M. Bond, J. Phys. Chem. B 2008, 112, 6923-6936).

Briefly, equimolar amounts (1:1 mol/mol) of Brønsted acid and base were added dropwise simultaneously while stirring vigorously to dissipate the heat of the exothermic reaction. Prior to each experiment, [dema][TfO] was further dried at 80 °C under vacuum for 48 hours. After drying, Karl Fischer titrations were performed using a Metrohm 831 KF coulometer (Herisau, Switzerland) to confirm the water content in the PILs were below 200 ppm. The viscosity and density of [dema][TfO] were recorded using Anton Paar Lovis 2000 ME Microviscometer (MEP Instruments Pty Ltd, Australia) at a temperature of 25 °C.

*2.2 Synthesis of Fe-N/C Catalyst*

The Fe-N/C based catalyst was synthesized by pyrolysing polymerised *p*-phenylenediamine, ferric chloride and carbon black (Y. Zhu, B. Zhang, X. Liu, D.-W. Wang, D. S. Su, Angew. Chem. Int. Ed. 2014, 53, 10673-10677).

Briefly, acid treated carbon black was dispersed in p-phenylenediamine in 0.5 M HCl followed by slow addition of aqueous solution of ammonium peroxydisulfate while keeping the temperature below 10°C. An aqueous solution of $FeCl_3$ (1:4 molar ratio of $FeCl_3$ to phenylenediamine) was slowly added to the suspension. The mixture was continuously stirred for 24 hours after which the solvent was removed using a rotary evaporator. The precursor was heat-treated at 900°C under argon atmosphere for 1 hour, pre-leached with 1 M HCl at 80°C for 8 hours to remove unstable and inactive species and thoroughly rinsed with ultra-pure water. Finally, the catalyst was again heat-treated at 900°C under argon atmosphere for 3 hours to obtain the Fe-N/C catalyst.

*2.3 Physical characterization*

Scanning electron microscope (SEM) images of Fe-N/C were recorded using FEI Nova NanoSEM 230 with a Bruker Energy Dispersive X-Ray (EDX) system operated on 10 kV accelerating voltage. Transmission electron microscopy (TEM) was performed on a Philips CM 200 at 200 kV. The sample was prepared by drop casting ethanol suspensions onto copper grids. The XRD samples were prepared by drop casting the ethanol suspension onto the glass substrates while XPS measurements were carried out on a Thermo ESCALAB250i X-ray Photoelectron Spectrometer employing a monochromatic Al K $\alpha$ x-ray source (energy 1,486.68 eV).

*2.3.1 Electrochemical characterisation*

All the electrochemical measurements were performed on a CHI 760D bipotentiostat (CH Instruments) in a custom built electrochemical cell. For all electrochemical experiments, a rotating ring disk electrode (RRDE) with a glassy carbon (GC) disk (0.125 $cm^2$) and Pt ring (0.188 $cm^2$) (ALS Co., Ltd, Japan) was employed as working electrode. A constant flow of either oxygen or argon was maintained over the solution through a gas bubbler providing constant overpressure to prevent atmospheric contamination. The collection efficiency of the RRDE electrode was 41 % (estimated using 5 mM $K_3[Fe(CN)_6]$ in 1.0 M KCl solution). Pt wire and Ag wire were employed as counter and quasi reference electrodes, respectively. The Ag QRE was found to be relatively stable.

*2.3.2 Loading of the catalysts*

A Fe-N/C catalyst "ink" was prepared by dispersing 9 mg of catalyst in isopropanol/water (0.2 mL, 3:1 v/v) followed by addition of Nafion (20 μL). The suspension was then sonicated for 30 minutes to get a homogenous "ink" of the catalyst. 5 μL of "ink" was drop casted to the GC disk and left to dry in air resulting in a catalyst loading of 1.8 mg $cm^{-2}$. In case of Pt/C and carbon black (after treatment with 6 M HCl for 24 hours to remove any impurities), the catalyst loading was 1.0 mg $cm^{-2}$. All rotating disk electrode (RDE) and RRDE voltammograms were 95% ohmic drop (iR drop) compensated using same potentiostat while cyclic voltammetric and amperometric measurements were recorded without any *iR* compensation. For RDE measurements, the disk electrode was scanned cathodically at a scan rate of 10 mV $s^{-1}$ at varying rotation rate from 100-1600 rpm. The number of electrons (n) was calculated from the slopes of the linear fits of Koutecky-Levich plots according to the Koutecky-Levich equation:

$$\frac{1}{j} = \frac{1}{j_L} + \frac{1}{j_K} \qquad (1)$$

$$j_L = 0.62 n F D^{2/3} \omega^{1/2} \nu^{1/6} c \qquad (2)$$

where $j$ is the measured current density, $j_L$ and $j_K$ are diffusion limiting and kinetics current densities, $n$ is the number of electrons transferred, $\omega$ is the angular velocity of the disk ($\omega = 2nf$, $f$ is the linear rotation speed), $F$ is Faraday constant (96,485 C $mol^{-1}$), $\nu$ is the kinematic viscosity of [dema] [TfO] (0.225 $cm^2\ s^{-1}$), $D$ is the diffusion coefficient of $O_2$ in [dema] [TfO] ($1.1 \pm 0.2 \times 10^{-5}$ $cm^2\ s^{-1}$), $c$ is the concentration of $O_2$ in [dema] [TfO] ($1.79 \pm 0.04 \times 10^{-3}$ mol/L).

From the RRDE measurements, the number of electrons transferred and the percentage yield of $H_2O_2$ produced at the disk electrode during the ORR are calculated according to the following equations:

$$\%H_2O_2 = 200 \times \frac{\left[\frac{i_R}{N}\right]}{i_D + \left[\frac{i_R}{N}\right]} \qquad (3)$$

$$n = 4 \times \frac{i_D}{i_D + \left[\frac{i_R}{N}\right]} \qquad (4)$$

where $i_D$ is disk current, $i_R$ is ring current and $N$ is the current collection efficiency of the Pt ring (0.41 determined from the reduction of $K_3[Fe(CN)_6]$.

**Example 2**

In this example, a Fe-N/C based catalyst was prepared and its catalytic activity in the oxygen reduction reaction (ORR) in a PIL ([dema][TfO]) was investigated and compared with a commercially available Pt/C catalyst.

To the best of the inventor's knowledge, this work represents the first non-precious metal based catalyst capable of catalysing the $4e^-$ reduction of oxygen to water in a protic ionic liquid.

The inventor surprisingly found that Fe-N/C can catalyse the $4e^-$reduction of oxygen to water in [dema][TfO] with high catalytic activity - approaching that of Pt/C, and displayed a durability that was higher than Pt-based catalysts.

These results demonstrate that such a system may be capable of reducing the cost associated with Pt-based catalysts and humidification of aqueous electrolytes, and may thus assist in the future large scale implementation of fuel cells based on this technology.

The PIL, [dema][TfO], was synthesized and characterized using the procedure described in Example 1. The Fe-N/C catalyst was prepared by pyrolysing p-phenylnediamine, ferric chloride and carbon black as described in Example 1. The SEM image (Figure 1a) shows the nanostructured Fe-N/C particles which are relatively uniform and well dispersed. The presence of Fe and N in the resulted carbon is detected by an EDX line scan detection mode, Figure 4a. From the TEM image (Figure 4b), the Fe-N/C sample showed amorphous-like carbon particles of size 50 ~ 80 nm. High magnification TEM (Figure 1b) reveals that graphite lattice is not well developed while no crystalline metal or metal sulphide phases are observed. XRD is applied to further characterise the crystalline structure and phase composition of Fe-N/C catalyst. The XRD pattern of the Fe-N/C catalyst confirmed the non-crystallinity (or at least minimal crystallinity) of the material with only a broader peak at 18-30 $2\theta$, Figure 5. No diffraction peaks for Fe3C and FeS were observed, supporting the observations made by TEM images.

In developing the present system, it was useful to determine the nature of the active sites of the Fe-N/C catalyst for improving the ORR electrocatalytic activity of the catalyst. In this regard, $Fe_3C$ and FeS sites are not known to be active sites for the ORR and are possibly removed during the acid leaching process (due to their poor stability in acid). In forming the Fe-N/C catalyst, pyrolysis at high temperature induces decomposition of polymerised p-phenylenediamine in the precursors containing P-pPD- or P-mPD-coated carbon and $FeCl_3$ that leads to rearrangement of Fe, nitrogen and carbon to form FeN complexes bonded into carbon support. It is expected that the electrochemical activity of Fe-N/C is due to presence of Fe-N complexes in the catalyst.

More information concerning the chemical state of doped Fe-N/C catalyst was acquired by XPS. The XPS survey scan, Figure 6a, shows the bonding configurations of carbon, nitrogen, oxygen, iron and sulphur for the catalyst. The N 1s spectrum, Figure 1c, can be deconvoluted into two peaks at 398.5 and 401.09 eV, which can be assigned to pyridinic N and graphitic N, respectively, corresponding to their respective binding energies. It has been previously reported that both the graphitic N and pyridinic N play a crucial role in the catalytic activity of oxygen reduction. The Fe 2p spectrum (Figure 1d) can be deconvoluted into four peaks. The peaks with binding energies of 710.0 and 715.0 eV are attributed to the $2p_{3/2}$ orbitals of $Fe^{2+}$ and $Fe^{3+}$ species, respectively, while the peaks at 723.0 and 728.0 eV can be assigned to the binding energies of $2p_{1/2}$ orbitals of $Fe^{2+}$ and $Fe^{3+}$ species, respectively. The pyridinic-N atoms have been reported to serve as metal coordination sites due to the lone pair of electrons and the presence of pyridinic-N atoms in the catalyst suggests that Fe may be present in the Fe-N/C catalyst in the form of Fe-N complexes.

From the detailed S 2p spectrum (Figure 6b), only peaks associated with S-C species (163.7 and 164.8 eV) and SOx species (167.9 and 168.8 eV) are observed. No peak associated with the FeS is detected, indicating that any FeS generated was washed out during the acid leaching process, which is in agreement with the XRD and TEM analysis.

Figure 7 shows the CVs obtained at CB, Fe-N/C and Pt/C in $O_2$ saturated [dema][TfO], respectively. In the case of Fe-N/C, a reversible redox process, attributed to $Fe^{3+}/Fe^{2+}$ process, is observed at a formal potential of 0.33 V, similar to that previously reported for pyrolysed Fe-N/C catalyst in 0.5 M $H_2SO_4$ solution. The ORR was found to overlap significantly with the $Fe^{3+}/Fe^{2+}$ process, and shows a much more positive ORR onset potential (~ 0.235 V vs Ag QRE) compared to CB (~ -0.30 V vs Ag QRE). The CVs suggest significant ORR activity of Fe-N/C catalysts in [dema][TfO] and that the presence of Fe plays a significant role towards the ORR activity of the Fe-N/C catalyst. Previous studies have reported strong dependence of ORR activity on $Fe^{2+}/Fe^{3+}$ redox transitions. The lowest onset potential (0.50 V vs Ag QRE) for ORR in [dema][TfO] was observed using a Pt/C catalyst, in agreement with earlier studies using Pt/C in [dema][TfO].

The electrocatalytic activity of Fe-N/C was further studied using RDE voltammetry at rotation speeds ranging from 100 rpm to 1600 rpm in $O_2$ saturated [dema][TfO], Figure 2a, and compared to commercial Pt/C. The onset and half-wave potentials of Fe-N/C (~ 0.235 V and 0.165 V vs Ag QRE), Figure 2a, are more negative than Pt/C (0.50 V and 0.375 V vs Ag QRE, Figure 8a). Nevertheless, the limiting current density obtained at the Fe-N/C catalyst is to the same as Pt/C. It has been reported that the ORR using Pt in [dema] [TfO] proceeds via a $4e^-$ reduction mechanism at the Pt electrodes. These results suggest that the ORR using Fe-N/C in [dema] [TfO] also proceeds via a $4e^-$ reduction pathway.

The number of electrons transferred and the electron transfer mechanism for Fe-N/C and Pt/C were further investigated by the RDE measurements according to Koutecky-Levich equation. Figure 2b show the corresponding Koutecky-Levich plots obtained for Fe-N/C at different potential ranges. The plot shows good linearity and almost parallelism of best linear fits, indicating the first order reaction kinetics of dissolved oxygen and similar number of electrons transferred at different potentials. The number of electrons transferred (n) per $O_2$ molecule of Fe-N/C catalyst calculated from the slopes of linear fits of the Koutecky-Levich plots is 3.78 from -0.20 V to -0.40 V, consistent with a four electron pathway reduction of $O_2$ to $H_2O$. Similar results are obtained for Pt/C catalyst where the slopes remains approximately the same and the number of electrons transferred calculated is 4 in the potential range from 0.00 V to 0.20 V, Figure 8b. All the the calculation and all related parameters and their values are presented in Example 1.

To confirm that $H_2O$ is a major product of the ORR, RRDE measurements were carried out to quantify the yield

of $H_2O_2$ during the ORR. To find out the potential where the oxidation of $H_2O_2$ in [dema] [TfO] occurs, a CV in [dema] [TfO] containing 50 mM $H_2O_2$ was carried out at a Pt electrode. Figure 9 shows the CVs at Pt in Ar saturated [dema][TfO] in the absence and presence of 50 mM $H_2O_2$. The $H_2O_2$ oxidation peak appears at 0.90 V vs Ag QRE in 50 mM $H_2O_2$/[dema][TfO] and the shape of the CV is akin to that reported previously in [dema][TfO].

Figure 2c shows the RRDE measurements for Fe-N/C and Pt/C disk electrode and Pt ring electrode in $O_2$ saturated [dema] [TfO] at 1600 rpm while Figure 2d shows the potential dependent variation in % $H_2O_2$. For Fe-N/C, the $H_2O_2$ yield remains below 5 % while n calculated is almost constant at 4 over the whole potential range from -0.185 V to -0.70 V, indicating that $H_2O$ is the main product during the $O_2$ reduction in [dema] [TfO] at the Fe-N/C catalyst. This is in agreement with the number of electrons transferred from RDE measurements using Koutecky-Levich plots. For Pt/C, the % $H_2O_2$ yield is estimated to be below 4 % and n is 4 from 0.085 V to -0.270 V. The procedure to estimate the $H_2O_2$ yield is presented in Example 1. Both RDE and RRDE results demonstrate high catalytic activity and selectivity of Fe-N/C catalyst for ORR, which is similar to the commercially available Pt/C catalyst in [dema] [TfO] under the same conditions.

The stability of Fe-N/C in [dema] [TfO] was investigated via a chronoamperometric method. Figure 3a shows the chronoamperometric curves of Fe-N/C and Pt/C in $O_2$ saturated [dema] [TfO] at -0.50 V and -0.15 V, respectively. It can be seen that current density of Fe-N/C electrode exhibits a much slower decay than that of Pt/C electrode (Figure 3a). After 6 hours only a 30 % decrease in current density of the Fe-N/C electrode is observed. By comparison, the Pt/C electrode displays a noticeable decay in activity (75 % loss in initial current density) over a period of 6 hours in [dema] [TfO], presumably due to oxide formation and adsorption of $[TfO]^-$ on the surface of the Pt electrode. Previous studies have suggested that the adsorption of low valence state sulfur-containing species, such as $SO_3^{2-}$ and $S^{2-}$, are poisonous for Fe-N/C catalysts. However, such poisoning effect is much less than that of a Pt-based catalyst. The long term stability of the Fe-N/C catalyst in [dema] [TfO] thus could be attributed to the reduced adsorption and/or poisoning effect of $[TfO]^-$ anions on Fe-N/C catalyst surface.

Tolerance to methanol is a notable factor when evaluating the performance of an ORR catalyst due to the poisoning of catalyst by methanol crossover. Therefore, the stability of Fe-N/C and Pt/C in the presence of methanol in $O_2$ saturated [dema] [TfO] was also examined. Figure 3b shows the chronoamperometric measurements carried out at Fe-N/C and Pt/C in $O_2$ saturated [dema] [TfO] containing 3 M $CH_2OH$ at -0.50 V and -0.15 V for 6 hours. A slight increase in current is observed for both Fe-N/C and Pt/C with the addition of methanol. Enhanced current of ORR in ILs with addition of weak proton source like methanol has been previously reported. However, contribution from methanol oxidation reactions cannot be ignored. The decrease in the current density of Fe-N/C catalyst with the addition of 3 M methanol in [dema][TfO] is ~24 % after 6 hours, which is comparable to ORR in [dema][TfO] without methanol (Figure 3a). In contrast, the current density obtained at Pt/C decreased by as much as ~72 %.

These results indicate that the Fe-N/C catalyst has a significantly improved stability and methanol tolerance than the commercial Pt/C for ORR in [dema][TfO].

The results presented above in Example 2 demonstrate that a non-precious metal catalyst in contact with a cathode can effectively reduce oxygen to $H_2O$ via a 4 $e^-$ reduction in a protic ionic liquid. Accordingly, and as will be apparent to a person skilled in the art, these results demonstrate that such a system can be used in a fuel cell comprising a protic ionic liquid.

## Claims

1. A fuel cell comprising:

    - an anode;
    - a cathode;
    - a non-precious metal catalyst in contact with the cathode, wherein the non-precious metal catalyst is a Fe-N/C catalyst; and

    - an electrolyte comprising a protic ionic liquid in contact with the non-precious metal catalyst.

2. The fuel cell according to claim 1, wherein the Fe-N/C catalyst is derived from p-phenylenediamine, ferric chloride and carbon black.

3. The fuel cell according to claim 1 or 2, wherein the protic ionic liquid has the formula $(A^-)(BH^+)$, wherein $A^-$ is the conjugate base of acid HA, and $BH^+$ is the conjugate acid of base B, and the difference in $pK_a$ between HA and $BH^+$ ($\Delta pK_a$) is between about 12 and about 30, especially between about 15 and about 18.

4. The fuel cell according to claim 3, wherein the base B is an amine, especially wherein the base B is of formula (1):

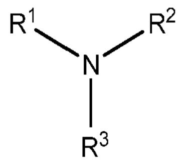

(I),

wherein $R^1$, $R^2$ and $R^3$ are each independently selected from the group consisting of hydrogen, optionally substituted alkyl (e.g. $C_{1-6}$alkyl), optionally substituted alkenyl (e.g. $C_{2-6}$alkenyl), and optionally substituted alkynyl (e.g. $C_{2-6}$alkynyl);
and wherein $R^1$, $R^2$ and/or $R^3$ are optionally joined to form a saturated or unsaturated optionally substituted heterocycle, a saturated or unsaturated optionally substituted heterobicycle or a saturated or unsaturated optionally substituted heterotricycle.

5. The fuel cell according to claim 4, wherein the base B is a trialkyl amine, especially diethylmethylamine.

6. The fuel cell according to any one of claims 3 to 5, wherein the conjugate base $A^-$ is (a) non-nucleophilic, (b) the conjugate base of a strong acid or (c) both non-nucleophilic and the conjugate base of a strong acid, especially wherein the conjugate base $A^-$ is triflate ($TfO^-$).

7. The fuel cell according to any one of claims 1 to 6, wherein the protic ionic liquid is [dema] [TfO].

8. The fuel cell according to any one of claims 1 to 7 comprising a membrane disposed between the anode and cathode, wherein the membrane permits protons to pass through the membrane while inhibiting or impeding the passage or conduction of electrons.

9. Use of a non-precious metal catalyst in a fuel cell to effect the $4e^-$ reduction of $O_2$ to $H_2O$ in an electrolyte comprising a protic ionic liquid, wherein the non-precious metal catalyst is a Fe-N/C catalyst.

10. A method of reducing $O_2$ to $H_2O$ comprising contacting $O_2$ and a non-precious metal catalyst in an electrolyte comprising a protic ionic liquid, wherein the non-precious metal catalyst is a Fe-N/C catalyst.

11. An electrode for use in a fuel cell comprising an electrolyte comprising a protic ionic liquid, the electrode having a non-precious metal catalyst on its surface, wherein the non-precious metal catalyst is a Fe-N/C catalyst.

12. A half-cell for a fuel cell comprising an electrode having a non-precious metal catalyst on its surface, wherein the electrode is in contact with a protic ionic liquid, wherein the non-precious metal catalyst is a Fe-N/C catalyst.

13. The use according to claim 9, method according to claim 10, electrode according to claim 11 or half-cell according to claim 12, wherein the protic ionic liquid has the formula $(A^-)(BH^+)$, wherein $A^-$ is the conjugate base of acid HA, and $BH^+$ is the conjugate acid of base B, and the difference in $pK_a$ between HA and $BH^+$ ($\Delta pK_a$) is between about 12 and about 30.

**Patentansprüche**

1. Brennstoffzelle, umfassend:

- eine Anode;
- eine Kathode;
- einen Nicht-Edelmetallkatalysator in Kontakt mit der Kathode, wobei der NichtEdelmetallkatalysator ein Fe-N/C-Katalysator ist; und
- einen Elektrolyten, der eine protische ionische Flüssigkeit umfasst, das in Kontakt mit dem Nichtedelmetallkatalysator ist.

2. Brennstoffzelle nach Anspruch 1, wobei der Fe-N/C-Katalysator aus p-Phenylendiamin, Eisenchlorid und Carbon

Black abgeleitet ist.

3. Brennstoffzelle nach Anspruch 1 oder 2, wobei die protische ionische Flüssigkeit die Formel ($A^-$ )(BH+) aufweist, wobei $A^-$ die konjugierte Base der Säure HA ist und BH+ die konjugierte Säure der Base B ist und der Unterschied in $pK_a$ zwischen HA und BH+ ($\Delta pK_a$ ) zwischen etwa 12 und etwa 30, insbesondere zwischen etwa 15 und etwa 18 liegt.

4. Brennstoffzelle nach Anspruch 3, wobei die Base B ein Amin ist, insbesondere wobei die Base B die Formel (I) hat:

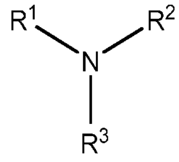

(I),

wobei $R^1$, $R^2$ und $R^3$ jeweils unabhängig voneinander ausgewählt sind aus der Gruppe bestehend aus Wasserstoff, gegebenenfalls substituiertem Alkyl (z.B. $C_{1-6}$ Alkyl), gegebenenfalls substituiertem Alkenyl (z.B. $C_{2-6}$ Alkenyl) und gegebenenfalls substituiertem Alkinyl (z.B. $C_{2-6}$ Alkinyl);
und wobei $R^1$, $R^2$ und/oder $R^3$ gegebenenfalls verbunden sind, um einen gesättigten oder ungesättigten, gegebenenfalls substituierten Heterocyclus, einen gesättigten oder ungesättigten, gegebenenfalls substituierten Heterobicyclusoder einen gesättigten oder ungesättigten, gegebenenfalls substituierten Heterotricyclus zu bilden.

5. Brennstoffzelle nach Anspruch 4, wobei die Base B ein Trialkylamin, insbesondere Diethylmethylamin, ist.

6. Brennstoffzelle nach einem der Ansprüche 3 bis 5, wobei die konjugierte Base $A^-$ (a) nicht-nukleophil, (b) die konjugierte Base einer starken Säure oder (c) sowohl nicht-nukleophil als auch die konjugierte Base einer starken Säure ist, insbesondere wobei die konjugierte Base $A^-$ Triflat (TfO-) ist.

7. Brennstoffzelle nach einem der Ansprüche 1 bis 6, wobei die protische ionische Flüssigkeit [dema] [TfO] ist.

8. Brennstoffzelle nach einem der Ansprüche 1 bis 7, ferner umfassend eine zwischen der Anode und der Kathode angeordnete Membran, wobei die Membran den Durchgang von Protonen durch die Membran ermöglicht, während sie den Durchgang oder die Leitung von Elektronen verhindert oder erschwert.

9. Verwendung eines Nicht-Edelmetall-Katalysators in einer Brennstoffzelle, um die $4e^-$ Reduktion von $O_2$ zu $H_2O$ in einem Elektrolyten zu bewirken, der eine protische ionische Flüssigkeit umfasst, wobei der Nicht-Edelmetall-Katalysator ein Fe-N/C-Katalysator ist.

10. Verfahren zur Reduktion von $O_2$ zu $H_2O$, umfassend das Inkontaktbringen von $O_2$ und einem Nicht-Edelmetall-Katalysator in einem Elektrolyten, der eine protische ionische Flüssigkeit umfasst, wobei der Nicht-Edelmetall-Katalysator ein Fe-N/C-Katalysator ist.

11. Elektrode zur Verwendung in einer Brennstoffzelle, umfassend einen Elektrolyten, der eine protische ionische Flüssigkeit umfasst, wobei die Elektrode einen Nicht-Edelmetall-Katalysator auf ihrer Oberfläche aufweist, wobei der Nicht-Edelmetall-Katalysator ein Fe-N/C-Katalysator ist.

12. Halbzelle für eine Brennstoffzelle, umfassend eine Elektrode mit einem Nicht-Edelmetall-Katalysator auf ihrer Oberfläche, wobei die Elektrode in Kontakt mit einer protischen ionischen Flüssigkeit steht, wobei der Nicht-Edelmetall-Katalysator ein Fe-N/C-Katalysator ist.

13. Die Verwendung nach Anspruch 9, das Verfahren nach Anspruch 10, die Elektrode nach Anspruch 11 oder die Halbzelle nach Anspruch 12, wobei die protische ionische Flüssigkeit die Formel ($A^-$ )(BH+) hat, wobei A- die konjugierte Base der Säure HA ist und BH+ die konjugierte Säure der Base B ist und der Unterschied in $pK_a$ zwischen HA und BH+ ($\Delta pK_a$ ) zwischen etwa 12 und etwa 30 liegt.

## Revendications

**1.** Une pile à combustible comprenant

- une anode;
- une cathode;
- un catalyseur à base de métal non précieux en contact avec la cathode, où le catalyseur à base de métal non précieux est un catalyseur Fe-N/C; et
- un électrolyte comprenant un liquide ionique pratique en contact avec le catalyseur à base de métal non précieux.

**2.** La pile à combustible selon la revendication 1, où le catalyseur Fe-N/C est dérivé de la p-phénylènediamine, du chlorure ferrique et du noir de carbone.

**3.** La pile à combustible selon la revendication 1 ou 2, où le liquide ionique pratique a la formule (A)(BH+), où $A^-$ est la base conjuguée de l'acide HA, et BH+ est l'acide conjugué de la base B, et la différence de $pK_a$ entre HA et BH+ ($\Delta pK_a$) est comprise entre environ 12 et environ 30, en particulier entre environ 15 et environ 18.

**4.** La pile à combustible selon la revendication 3, où la base B est une amine, en particulier où la base B est de formule (I) :

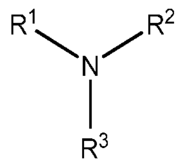

(I),

où $R^1$, $R^2$ et $R^3$ sont chacun indépendamment choisis du groupe constitué par l'hydrogène, l'alkyle facultativement substitué (par exemple $C_{1-6}$ alkyl), l'alcényle facultativement substitué (par exemple $C_{2-6}$ alkenyl), et l'alcynyle facultativement substitué (par exemple $C_{2-6}$ alkynyl) ;
et où $R^1$, $R^2$ et/ou $R^3$ sont facultativement réunis pour former un hétérocycle saturé ou insaturé facultativement substitué, un hétérocycle saturé ou insaturé facultativement substitué ou un hétérotricycle saturé ou insaturé facultativement substitué.

**5.** La pile à combustible selon la revendication 4, où la base B est une trialkylamine, en particulier la diéthylméthylamine.

**6.** La pile à combustible selon l'une des revendications 3 à 5, où la base conjuguée $A^-$ est (a) non nucléophile, (b) la base conjuguée d'un acide fort ou (c) à la fois non nucléophile et la base conjuguée d'un acide fort, en particulier où la base conjuguée $A^-$ est le triflate $(TfO)^-$.

**7.** La pile à combustible selon l'une des revendications 1 à 6, où le liquide ionique pratique est [dema] [TfO].

**8.** La pile à combustible selon l'une des revendications 1 à 7 comprenant une membrane disposée entre l'anode et la cathode, où la membrane permet aux protons de passer à travers la membrane alors qu'elle inhibe ou empêche le passage ou la conduction des électrons.

**9.** Utilisation d'un catalyseur à base de métal non précieux dans une pile à combustible pour effectuer la $4e^-$ réduction de Oz en Hz 0 dans un électrolyte comprenant un liquide ionique pratique, où le catalyseur à base de métal non précieux est un catalyseur Fe-N/C.

**10.** Un procédé de réduction de Oz en $H_2$ O comprenant mettre en contact $O_2$ et un catalyseur à base de métal non précieux dans un électrolyte comprenant un liquide ionique pratique, où le catalyseur à base de métal non précieux est un catalyseur Fe-N/C.

**11.** Une électrode pour être utilisée dans une pile à combustible, comprenant un électrolyte composé d'un liquide ionique pratique, l'électrode ayant à sa surface un catalyseur à base de métal non précieux, où le catalyseur à base de métal non précieux est un catalyseur Fe-N/C.

**12.** Une demi-pile pour une pile à combustible comprenant une électrode ayant un catalyseur en métal non précieux à sa surface, où l'électrode est en contact avec un liquide ionique pratique, où le catalyseur en métal non précieux est un catalyseur Fe-N/C.

**13.** L'utilisation selon la revendication 9, le procédé selon la revendication 10, l'électrode selon la revendication 11 ou la demi-pile selon la revendication 12, où le liquide ionique pratique a la formule $(A^-)(BH^+)$, où $A^-$ est la base conjuguée de l'acide HA, et BH+ est l'acide conjugué de la base B, et la différence de $pK_a$ entre HA et $BH^+$ ($\Delta pK_a$ ) est comprise entre environ 12 et environ 30.

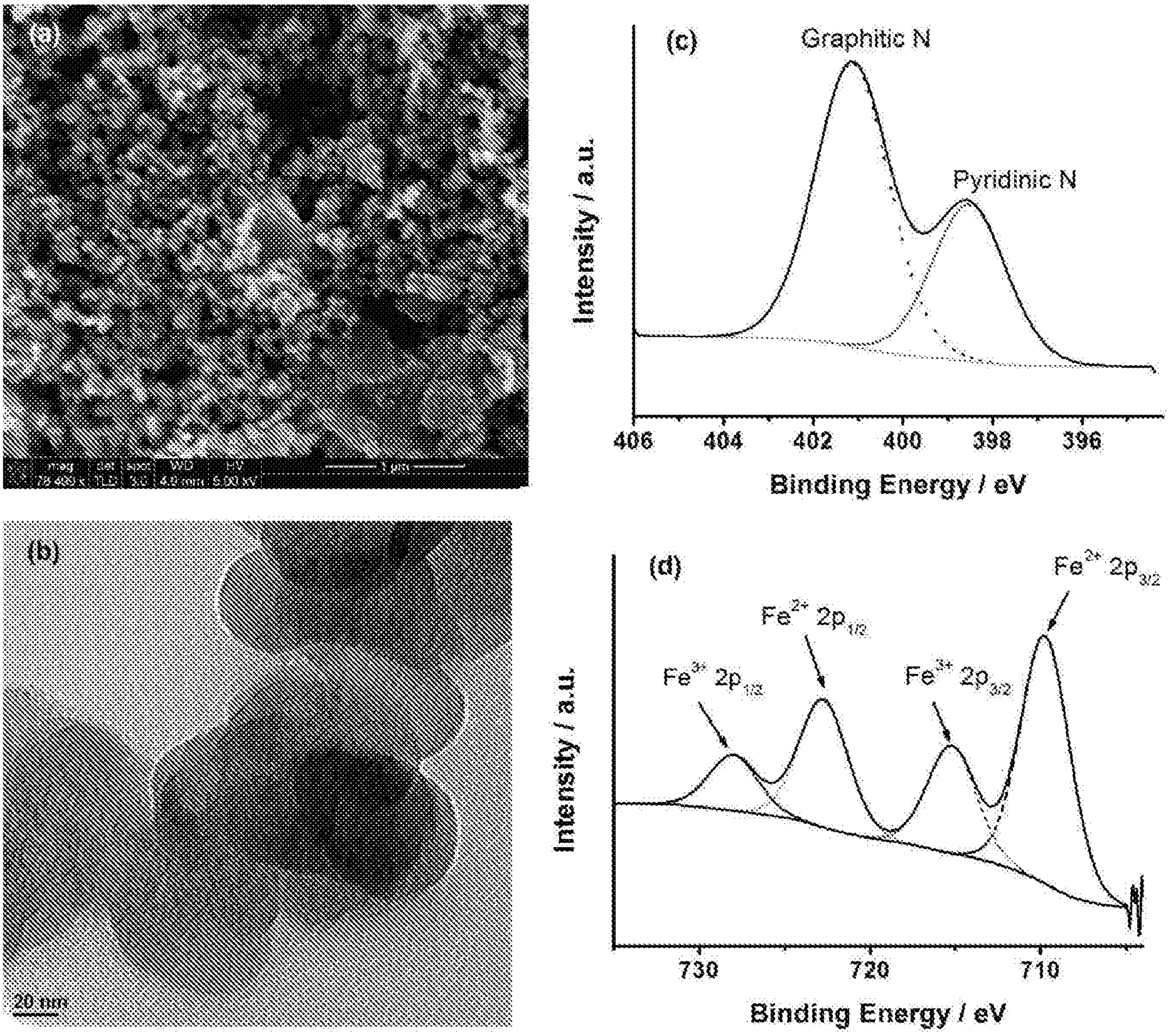
(a)
1 μm
(b)
20 nm
(c)
Graphitic N
Pyridinic N
Intensity / a.u.
406
404
402
400
398
396
Binding Energy / eV
(d)
Fe2+ 2p3/2
Fe2+ 2p1/2
Fe3+ 2p1/2
Fe3+ 2p3/2
Intensity / a.u.
730
720
710
Binding Energy / eV

Figure 1.

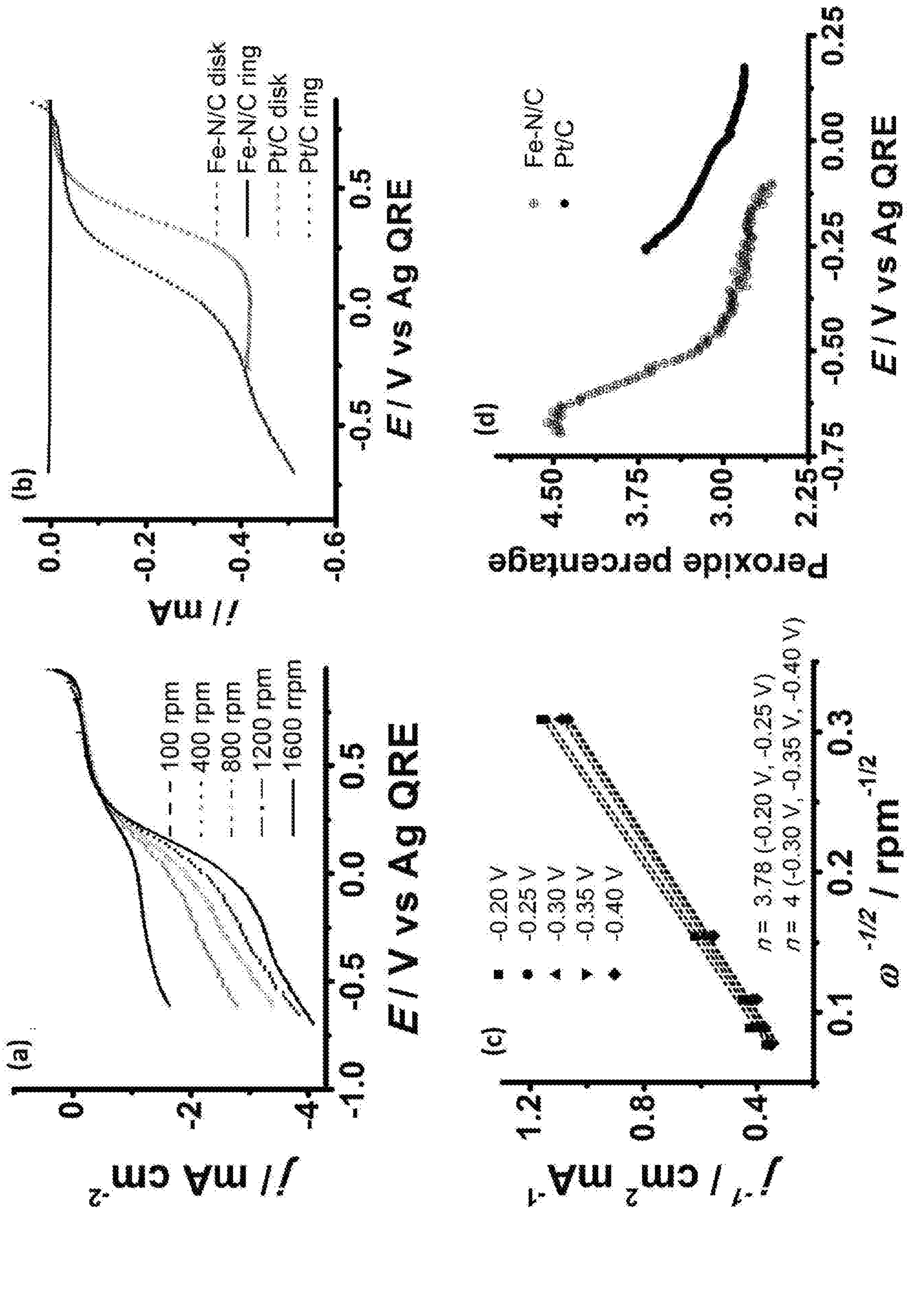
(a)
j / mA cm-2
E / V vs Ag QRE
100 rpm
400 rpm
800 rpm
1200 rpm
1600 rpm
(b)
j / mA
E / V vs Ag QRE
Fe-N/C disk
Fe-N/C ring
Pt/C disk
Pt/C ring
(c)
j-1 / cm2 mA-1
ω-1/2 / rpm-1/2
-0.20 V
-0.25 V
-0.30 V
-0.35 V
-0.40 V
n = 3.78 (-0.20 V, -0.25 V)
n = 4 (-0.30 V, -0.35 V, -0.40 V)
(d)
Peroxide percentage
E / V vs Ag QRE
Fe-N/C
Pt/C

Figure 2.

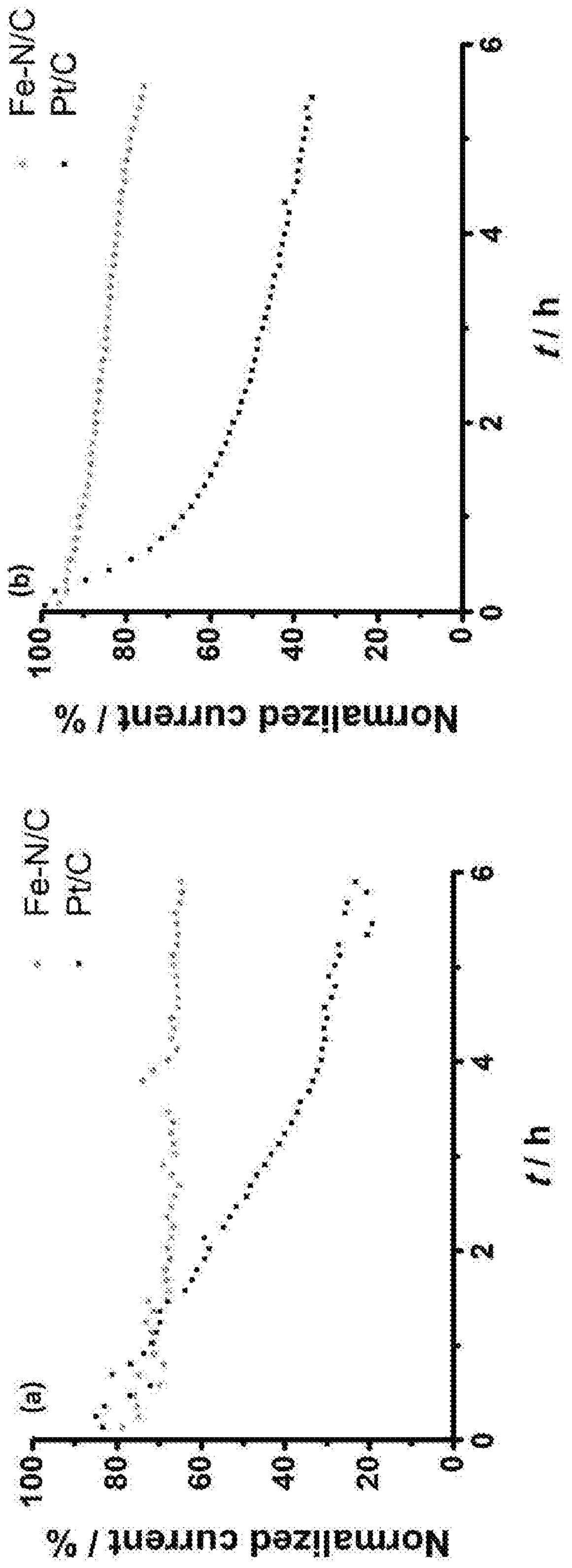
(a)
Fe-N/C
Pt/C
Normalized current / %
100
80
60
40
20
0
0
2
4
6
t / h
(b)
Fe-N/C
Pt/C
Normalized current / %
100
80
60
40
20
0
0
2
4
6
t / h

Figure 3.

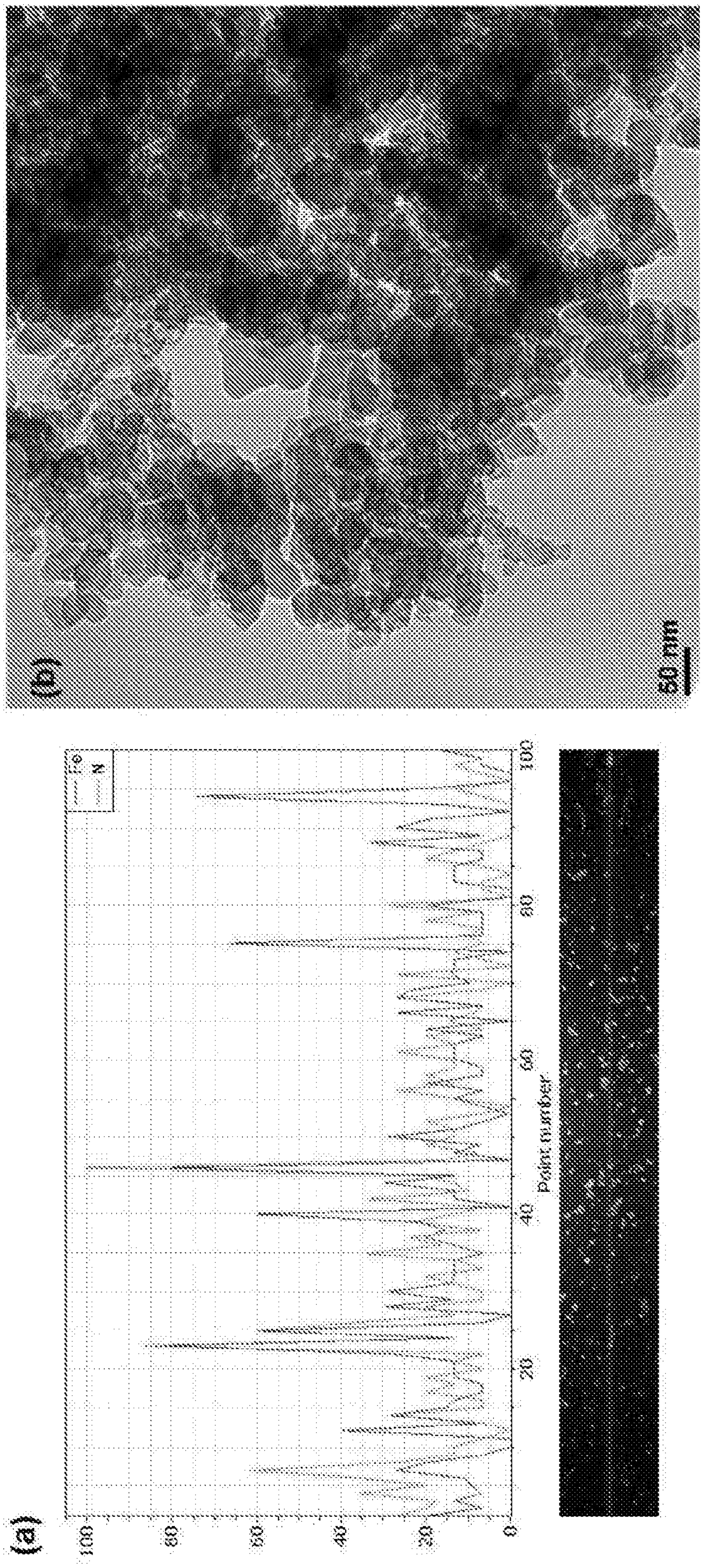


Figure 4.

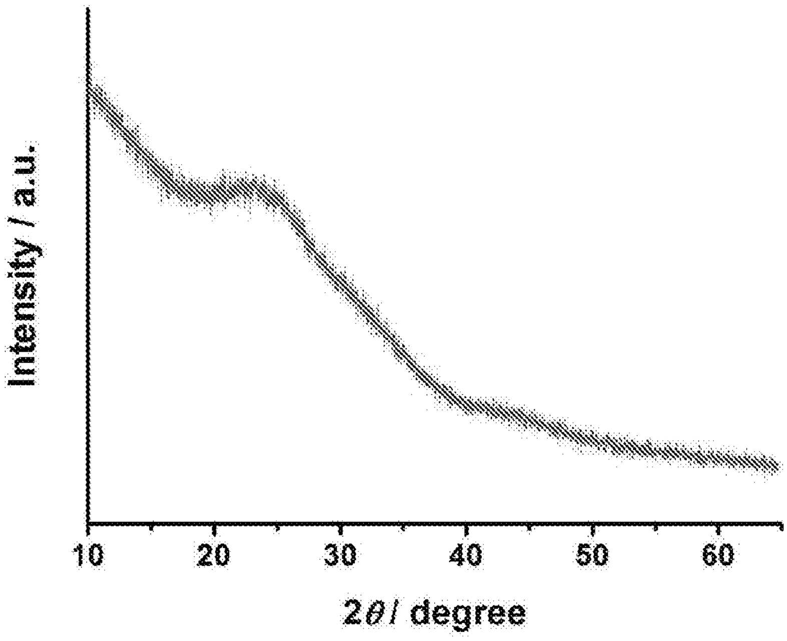


Figure 5.

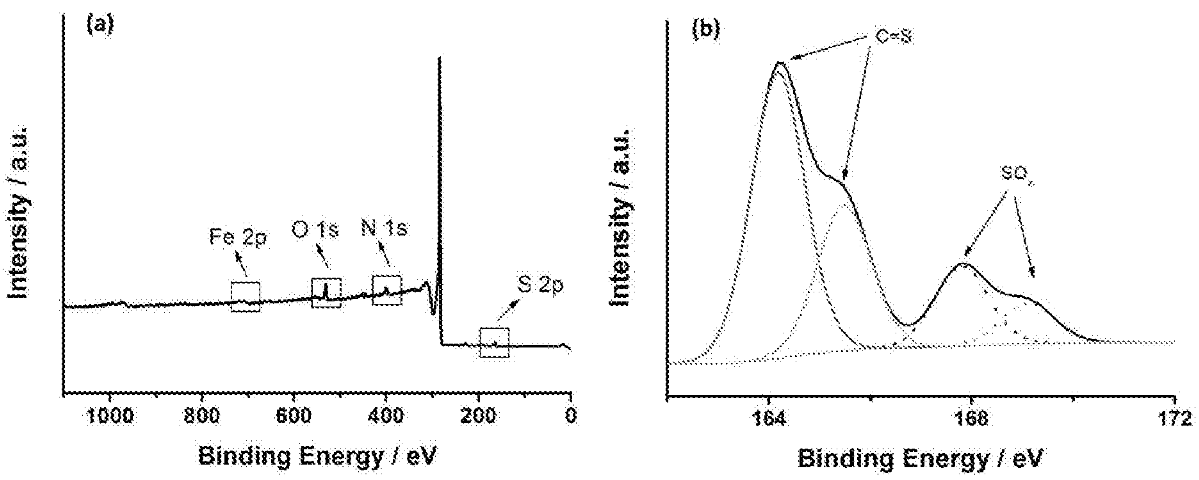


Figure 6.

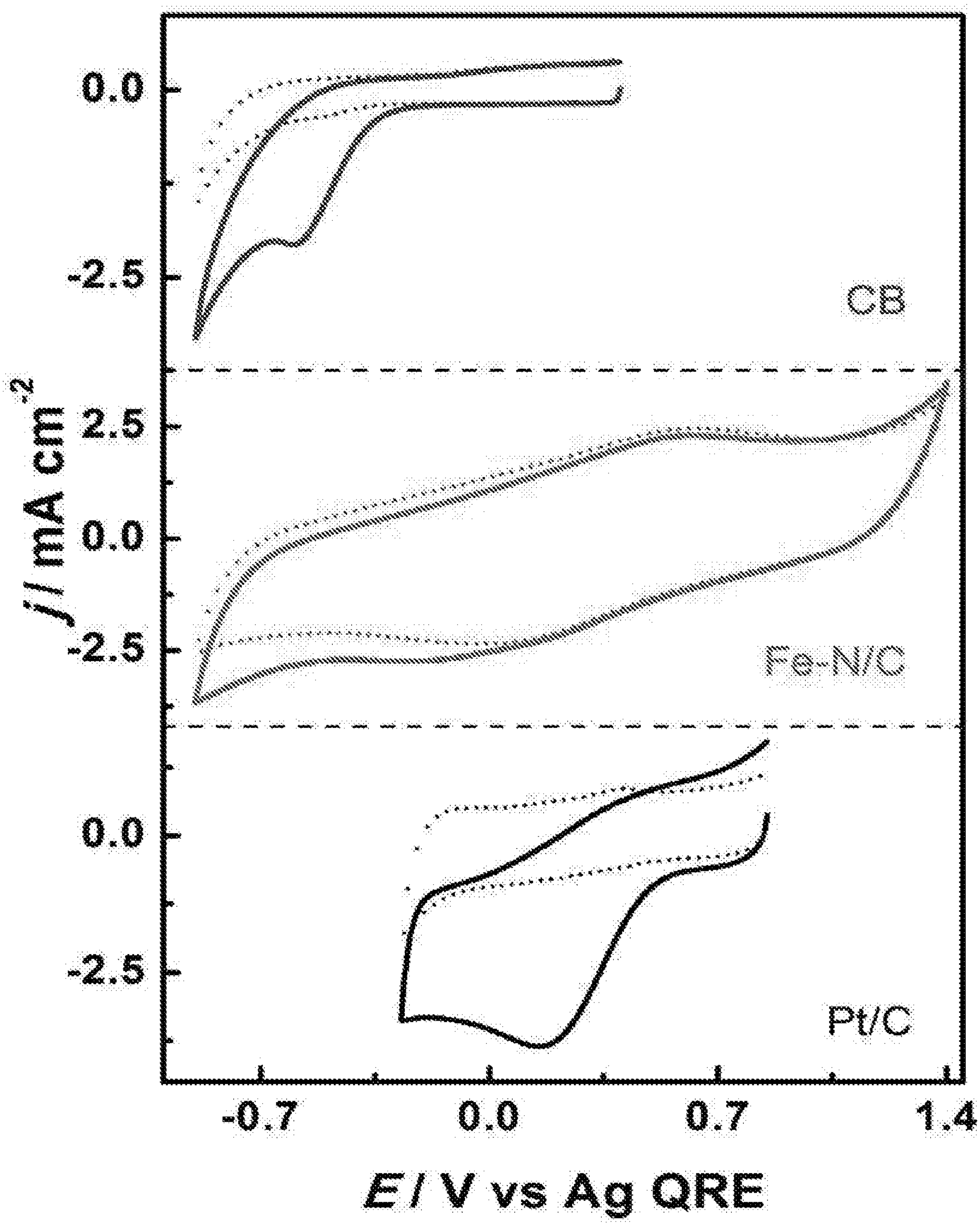


Figure 7.

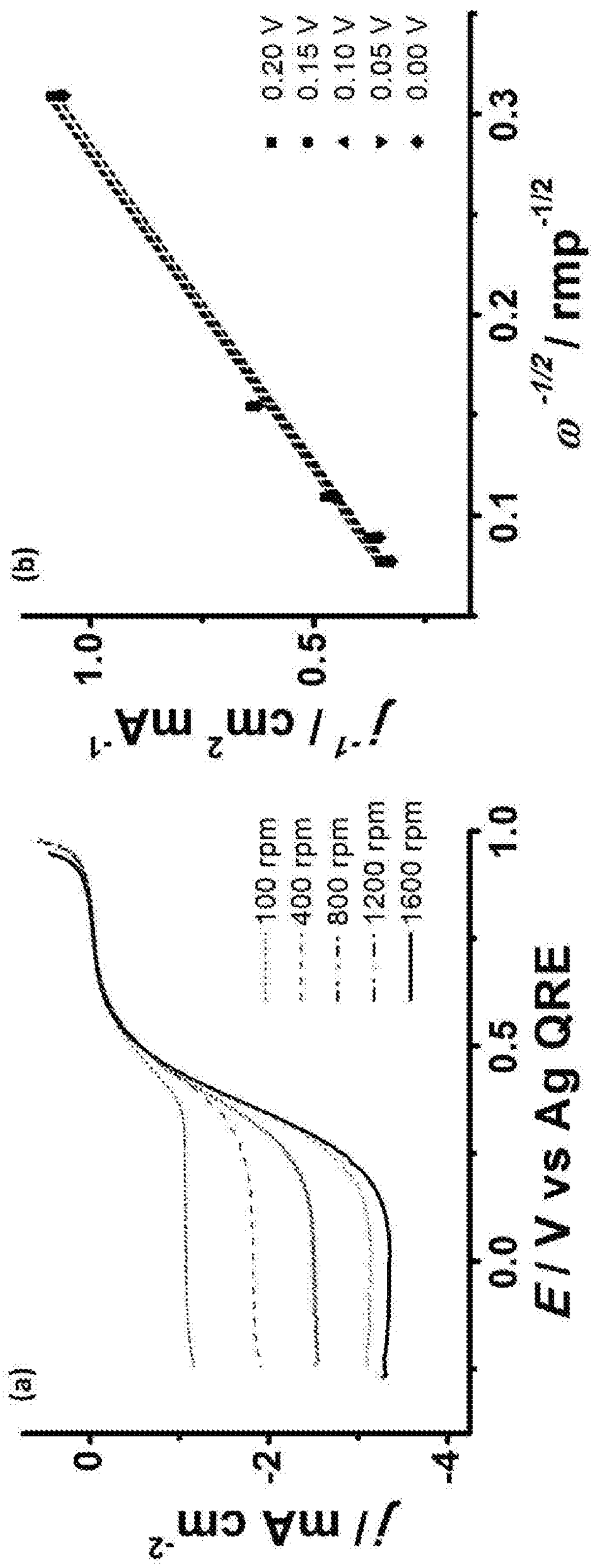
(a)
j / mA cm-2
0
-2
-4
0.0
0.5
1.0
E / V vs Ag QRE
100 rpm
400 rpm
800 rpm
1200 rpm
1600 rpm
(b)
j-1 / cm2 mA-1
0.5
1.0
0.1
0.2
0.3
ω -1/2 / rmp-1/2
0.20 V
0.15 V
0.10 V
0.05 V
0.00 V

Figure 8.

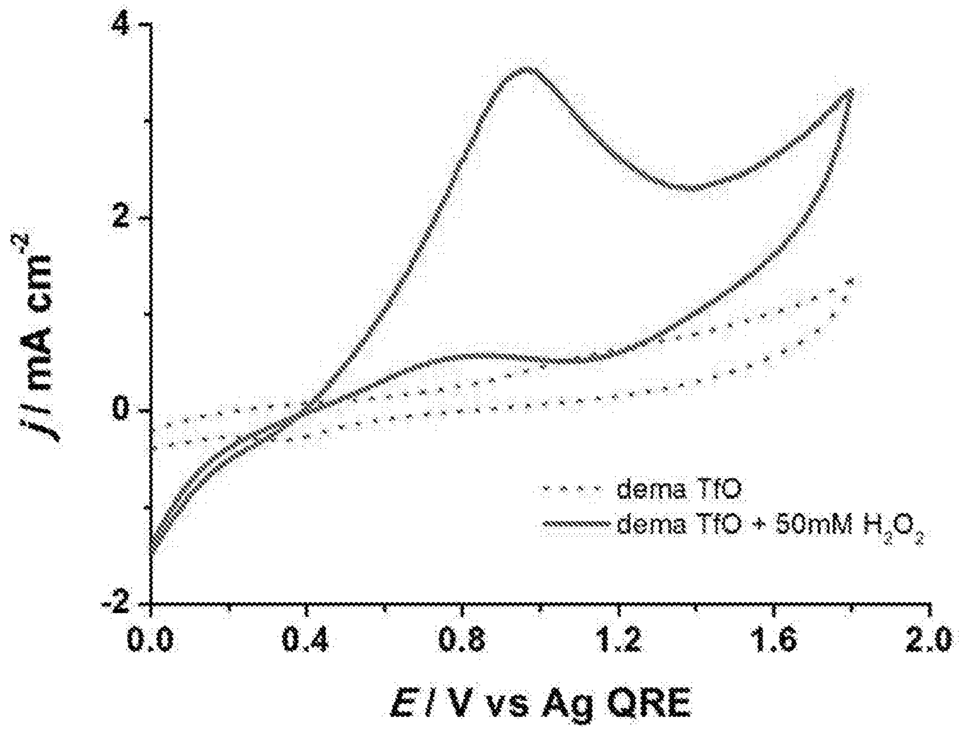
4
2
0
-2
j / mA cm$^{-2}$
0.0
0.4
0.8
1.2
1.6
2.0
E / V vs Ag QRE
dema TfO
dema TfO + 50mM $H_2O_2$

Figure 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YANSONG ZHU et al.** Unravelling the Structure of Electrocatalytically Active Fe-N Complexes in Carbon for the Oxygen Reduction Reaction. *ANGEWANDTE CHEMIE, INTERNATIONAL EDITION,* 12 August 2014, vol. 53 (40), 10673-10677
- **A. KHAN ; X. LU ; L. ALDOUS ; C. ZHAO.** *J. Phys. Chem. C,* 2013, vol. 117, 18334-18342
- **X. LU ; G. BURRELL ; F. SEPAROVIC ; C. ZHAO.** *J. Phys. Chem. B,* 2012, vol. 116, 9160-9170
- **C. ZHAO ; G. BURRELL ; A. A. J. TORRIERO ; F. SEPAROVIC ; N. F. DUNLOP ; D. R. MACFARLANE ; A. M. BOND.** *J. Phys. Chem. B,* 2008, vol. 112, 6923-6936
- **Y. ZHU ; B. ZHANG ; X. LIU ; D.-W. WANG ; D. S. SU.** *Angew. Chem. Int. Ed,* 2014, vol. 53, 10673-10677